# EUROPÄISCHE PATENTSCHRIFT

(11) **EP 0 865 396 B1**
(45) Veröffentlichungstag und Bekanntmachung des Hinweises auf die Patenterteilung: **04.08.1999**
(21) Anmeldenummer: 96937317.4
(22) Anmeldetag: 31.10.1996
(51) Int. Cl.: B65G 51/24, A24C 5/32, B65G 47/68

(54) **WEICHE FÜR EIN PNEUMATISCH ARBEITENDES TRANSPORTSYSTEM**
POINTS FOR A PNEUMATIC TRANSPORT SYSTEM
AIGUILLAGE POUR SYSTEME DE TRANSPORT PNEUMATIQUE

(30) Priorität: 02.11.1995 EP 95117242
(43) Veröffentlichungstag der Anmeldung: 23.09.1998
(73) Patentinhaber: FABRIQUES DE TABAC REUNIES S.A., 2003 Neuchâtel-Serrières (CH)
(72) Erfinder: FURMANSKI, Horst, D-10829 Berlin (DE); LÜNEBURG, Jörg, D-12487 Berlin (DE); COLDITZ, Olaf, D-12555 Berlin (DE)
(74) Vertreter: Abitz, Walter, Dr.-Ing.
(86) Internationale Anmeldenummer: EP9604742
(87) Internationale Veröffentlichungsnummer: WO9716365

(56) Entgegenhaltungen:
- DE-B- 1 026 242
- DE-C- 470 307
- FR-A- 2 085 337
- FR-A- 2 094 269
- US-A- 3 019 741

## Beschreibung

Die Erfindung betrifft eine Weiche für ein pneumatisch arbeitendes Transportsystem. Die Weiche weist zwei Zweigkanäle auf, die sich unter spitzem Winkel innerhalb einer Weichenkammer zu einem Stammkanal vereinigen, sowie eine Zunge, die zwischen den beiden Zweigkanälen an dem ihnen zugewandten Ende der Weichenkammer gelagert ist und zwischen zwei Stellungen verschwenkbar ist, in denen jeweils zwischen nur einem der Zweigkanäle und dem Stammkanal eine Verbindung besteht.

Derartige Weichen wie sie beispielsweise durch die DE-B-1 0 26 242 bekanntgeworden sind, werden z.B. in Rohrpostanlagen verwendet. Zum Verschwenken der Zunge sind dabei Umschalteinrichtungen vorgesehen, die mit Energie- und Steuerleitungen verbunden sind.

Der Erfindung liegt die Aufgabe zugrunde, den mit dem Einbau und dem Betrieb einer solchen Weiche verbundenen Aufwand zu verringern.

Erfindungsgemäß wird diese Aufgabe durch einen bistabilen Umschaltmechanismus gelöst, der die Zunge in einer der beiden Stellungen mit einer definierten Kraft hält.

Bei der Filterbeschickungsweiche kann es sich um eine aktive Weiche handeln, in welchem Fall dann der Stammkanal der Eintrittskanal ist und die beiden Zweigkanäle die Austrittskanäle für den Produktstrom sind. Zur zwangsweisen Umsteuerung der Zunge sind dabei an dem dem Stamm- oder Eintrittskanal nahen Ende der Zunge zu beiden Seiten Pneumatikzylinder angeordnet, die die Zunge unter Überwindung der Haltekraft umsteuern.

Bei der Ausführungsform als passive Weiche sind die beiden Zweigkanäle die Eintrittskanäle und ist der Stammkanal der Austrittskanal. In diesem Fall sind keine Mittel zur zwangsweisen Umsteuerung der Zunge vorhanden und ist die Haltekraft so zu bemessen, daß die Zunge durch den Luftdruck, der in dem sich in Eingriff befindenden Zweigkanal zur Förderung der Produkte erzeugt wird, und durch den eintreffenden Produktstrom selbst umgelegt wird. Durch diese passive Steuerung der Zunge ist es nicht mehr erforderlich, zum Einbauort der Weiche Energie- und Steuerleitungen zu verlegen.

Die definierte Haltekraft wird vorzugsweise durch Haltemagnete erzeugt, die auf die Zunge in deren beiden Endstellungen einwirken.

Die erfindungsgemäße Weiche eignet sich insbesondere für ein Transportsystem, durch das Zigaretten-Filterstäbe von einer von mehreren Filterstabherstellmaschinen zu einer von mehreren Filteransetzmaschinen gefördert werden. Durch eine oder mehrere hintereinander angeordnete erfindungsgemäße aktive Weichen können die Filterstäbe einer Filterstabherstellmaschine einer bestimmten aus einer Anzahl von Filteransetzmaschinen zugeführt werden und können umgekehrt durch eine oder mehrere hintereinander angeordnete erfindungsgemäße passive Weichen die Filterstäbe einer beliebigen Anzahl von Filterstabherstellmaschinen einer bestimmten Filteransetzmaschine zugeführt werden.

Bei passiven Weichen sind zur Vermeidung eines Druckabfalls über den gerade nicht im Eingriff befindlichen Zweigkanal vorzugsweise in den von den Filterstabherstellmaschinen zu der Weiche führenden Förderstrecken Absperrventile vorgesehen. Durch diese Absperrventile wird ein unbeabsichtigter Produktstrom aus dem zu einem Zeitpunkt nicht im Eingriff befindlichen Zweigkanal verhindert. Gleichzeitige Produktströme aus beiden Zweigkanälen würden zwangsläufig zu Verklemmungen der Weiche führen und diese blockieren.

Die Absperrventile sind separat von den Weichen eingebaut. Die Stelle ihrer Anordnung kann so gewählt werden, daß sich möglichst kurze Wege für die Leitungen der Hilfsenergie und der Steuerung ergeben. Vorzugsweise sind die Absperrventile daher unmittelbar bei der Filterstabherstellungsmaschine eingebaut.

Auch bei aktiven Weichen können zur Vermeidung von Druckverlusten Absperrventile in den Zweigkanälen angeordnet sein.

Bei der Herstellung von Filterzigaretten kann die Filterherstellung aus produktionstechnischen Gründen räumlich getrennt von der Zigarettenherstellung erfolgen. Die Zigarettenfilter werden dabei als Filterstäbe, die eine Länge von vier bis sechs Zigarettenfilterstücken haben, über Beschikkungsrohre pneumatisch zu den Filteransetzmaschinen gefördert, die Teil der Zigarettenherstellungsanlage sind. Bei großen Zigarettenherstellungsanlagen können dabei 50 oder mehr derartige Beschickungsrohre vorhanden sein. Je nach der Produktionsleistung einer Zigarettenherstellmaschine wird diese über mehrere Beschickungsrohre mit Filterstäben versorgt. Die von einer Filterherstellmaschine produzierten Filterstäbe werden über spezielle Filterbeschitkungsvorrichtungen mit mehreren, z.B. bis zu 10, Beschickungsrohre verschickt. Fällt eine der Filterherstellmaschinen oder der Filterbeschickungsvorrichtungen aus, so tritt an den angeschlossenen Zigarettenmaschinen eine Unterversorgung mit Filterstäben auf. Umgekehrt müßte beim Ausfall einer Zigarettenmaschine die diese mit Filterstäben versorgende Filterherstellmaschine abgeschaltet werden. Um eine solche Unterproduktion auf Seiten der Zigarettenmaschinen und die zwangsweise Abschaltung von Filterherstellmaschinen zu vermeiden, werden die Beschickungsrohre durch eine Wechselstrecke geführt, innerhalb der durch manuelles Umstecken der Beschickungsrohre die Zuordnung zwischen Filterherstellmaschine und Zigarettenmaschine geändert werden kann. Das manuelle Umstecken der Beschickungsrohre ist jedoch nicht nur zeitraubend, sondern es treten dabei auch leicht Verwechslungen auf.

Die erfindungsgemäßen aktiven und passiven Weichen eignen sich insbesondere auch zum Einsatz bei der Vorrichtung zur flexiblen Versorgung von mehreren Zigarettenmaschinen mit Filterstäben gemäß der gleichzeitig eingereichten deutschen Gebrauchsmusteranmeldung (eigenes Zeichen 30588 - Bezeichnung: "Vorrichtung zur flexiblen Versorgung von mehreren Zigarettenmaschinen mit Filterstäben").

Ein Ausführungsbeispiel der Erfindung wird nachfolgend anhand der Zeichnungen näher erläutert. Es zeigen:
- Fig. 1: eine passive Weiche im Schnitt,
- Fig. 2: das Absperrventil im Schnitt,
- Fig. 3: eine aktive Weiche im Schnitt und
- Fig. 4: schematisch eine Wechselstrecke.

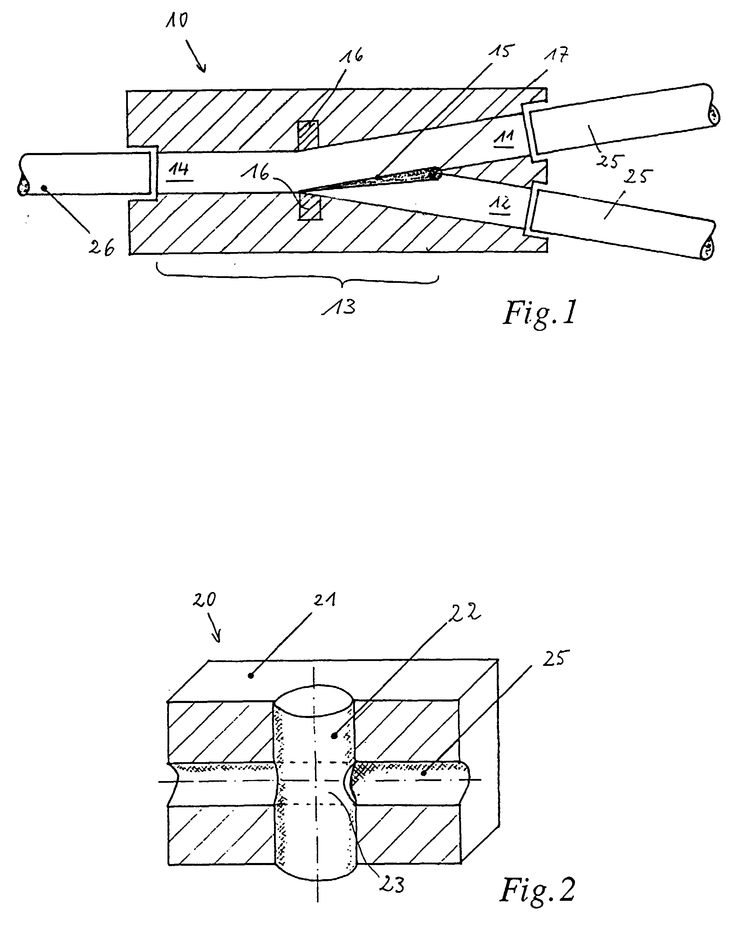

Gemäß Fig. 1 weist eine passive Weiche 10 zwei Zweigkanäle 11, 12 auf, die sich innerhalb der Weiche 10 unter einem spitzen Winkel innerhalb einer Weichenkammer 13 zu einem Stammkanal 14 vereinigen. Da es sich um eine passive Weiche handelt, sind die Zweigkanäle 11, 12 Eintrittskanäle und ist der Stammkanal 14 ein Austrittskanal. Die Weichenkammer 13 erstreckt sich von dem Punkt, an dem die beiden Zweigkanäle zusammentreffen bis zum Stammkanal 14. Eine Zunge 15 ist an der Stelle des Zusammentreffens der beiden Zweigkanäle 11, 12 an ihrem einen Ende verschwenkbar gelagert. Die Zunge 15 erstreckt sich innerhalb der Weichenkammer 13 bis zum Anfang des Stammkanals 14. Die Zunge 15 ist um eine Achse 17 zwischen zwei Stellungen verschwenkbar, in denen sie jeweils einen der beiden Zweigkanäle 11, 12 mit dem Stammkanal 14 in Eingriff bringt, d.h. den Durchgang von diesem Zweigkanal 11 oder 12 zum Stammkanal 14 freigibt, während sie den Eingriff des jeweils anderen Zweigkanal 12 bzw. 11 mit dem Stammkanal 14 aufhebt, d.h. den Durchgang von diesem Zweigkanal 12 bzw. 11 zum Stammkanal 14 verschließt. Bei der in Fig. 1 dargestellten Stellung befindet sich der erste Zweigkanal 11 im Eingriff, d.h. in ihm werden die Produkte pneumatisch gefördert. Die Zunge 15 gibt daher die Verbindung zwischen diesem Zweigkanal 11 und dem Stammkanal 14 frei.

Wird der Zweigkanal 12 in Eingriff gebracht, so wird die Zunge 15 durch den dann in diesem Zweigkanal 12 herrschenden Überdruck und den Produktstrom in die andere Stellung passiv umgeschaltet. Um diese passive Umschaltung zu ermöglichen hat die Zunge 15 beabsichtigt ein großes Spiel.

Um die Zunge 12 stabil in einer der beiden Lagen zu halten sind am Ende der Weichenkammer 13 seitlich in der Kanalwand Permanentmagnete 16 angeordnet, die das freie Ende der Zunge 15 mit einer definierten Kraft festhalten. Die Halte- oder Haftkraft ist dabei so bemessen, daß bei einem Eingriffwechsel zwischen den Zweigkanälen 11 und 12 der in dem nunmehr in Eingriff gebrachten Zweigkanal 11 bzw. 12 herrschende Luftdruck die Zunge 12 passiv umlegen kann. Statt der Permanentmagnete 16 kann auch eine andere Art eines bistabilen Umschaltmechanismus vorgesehen sein, der z.B. auf die Achse 17 der Zunge 15 wirkt.

Die vorausgehend beschriebene Weiche 10 eignet sich insbesondere für ein Transportsystem, durch das Zigaretten-Filterstäbe von mehreren Filterstabherstellmaschinen zu einer von mehreren Filteransetzmaschinen gefördert werden. Die Zweigkanäle 11, 12 sind dabei über zuführende Förderstrecken 25 mit jeweils einer Filterstabherstellmaschine verbunden und der Stammkanal 14 ist über eine abführende Förderstrecke 26 mit einer Filteransetzmaschine verbunden. Der Stammkanal 14 kann auch über eine Zwischen-Förderstrecke mit dem Zweigkanal 11, 12 einer weiteren Weiche 10 verbunden sein, wobei im Prinzip eine beliebige Anzahl von Weichen 10 hintereinander angeordnet werden kann, so daß insgesamt ausschließlich durch Steuerung der Zunge der Weiche mittels des Produktstromes die Filterstäbe einer großen Anzahl von Filterstabherstellmaschinen einer bestimmten Filteransetzmaschine zugeführt werden können.

Zur Vermeidung von Druckverlusten über die zu einem Zeitpunkt nicht im Eingriff befindlichen Förderstrecken 25 und zur Verhinderung einer versehentlichen gleichzeitigen Förderung von Filterstäben durch zwei zu derselben Weiche 10 führenden Förderstrecken 25 sind in den zuführenden Förderstrecken 25 Absperrventile 20 gemäß Fig. 2 vorgesehen, wobei das Absperrventil 20 in der zu einem Zeitpunkt jeweils nicht im Eingriff befindlichen Förderstrecke 25 geschlossen ist.

Das Absperrventil 20 besteht aus einem Grundkörper 21, durch den eine zuführende Förderstrecke 25 verläuft. In einer quer dazu liegenden Bohrung ist ein Ventileinsatz 22 drehbar angeordnet. Durch den Ventileinsatz 22 erstreckt sich eine Bohrung 23 von dem gleichen Durchmesser wie die Förderstrecke 25. Durch Drehen des Ventileinsatzes 22 kann die Bohrung 23 in Fluchtung mit der Förderstrecke 25 gebracht werden, so daß das Absperrventil 20 offen ist. Wird der Ventileinsatz 22 dagegen um 90° gedreht, so ist das Absperrventil 20 geschlossen. An dem Ventileinsatz 22 sind außerhalb des Grundkörpers 21 noch geeignete Steuerelemente vorgesehen, die von üblicher Bauart sind und daher nicht dargestellt sind.

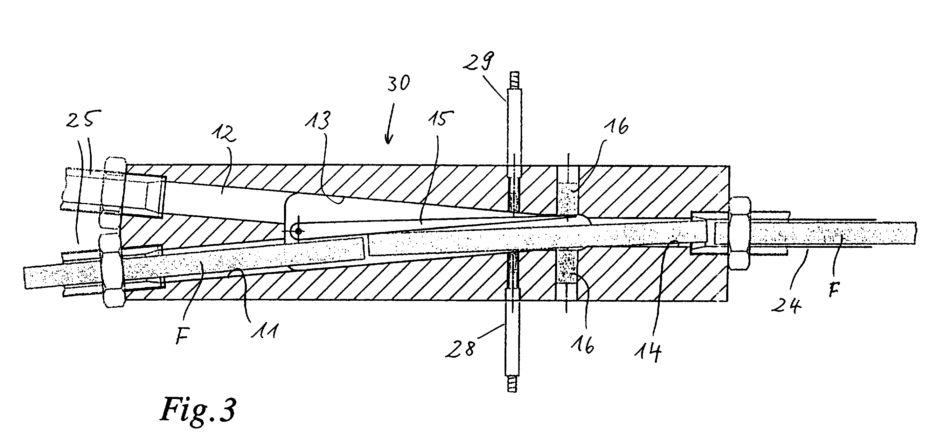

Fig. 3 zeigt eine Ausführungsform einer aktiven Weiche 30. Die beiden Zweigkanäle 11, 12 sind hierbei Austrittskanäle und der Stammkanal 14 ist ein Eintrittskanal für den Produktstrom, z.B. Filterstäbe F. Wie bei der Ausführungsform der passiven Weiche der Figuren 1 und 2 wird auch hierbei die Spitze der Zunge 15 durch Permanentmagnete 16 in einer der beiden Endpositionen an den Wänden der Weichenkammer 13 gehalten. Neben den Permanentmagneten 16 sind pneumatische Steuerzylinder 28, 29 vorgesehen, die in Bohrungen der Wand der Weichenkammer 13 sitzen und bei Beaufschlagung mit einem kurzen Luftdruckimpuls gegen die Kraft einer Rückholfeder ausfahren, wodurch sie an der Spitze der Zunge, 15 angreifen und die Zunge 15 umlegen, so daß die Filterstäbe F in den jeweils anderen der beiden Zweigkanäle 11, 12 geleitet werden. In den sich an die Zweigkanäle 11, 12 anschließenden Förderstrecken 25 sind wiederum Absperrventile 20 angeordnet, um die Förderstrecke 25, durch die gerade keine Filterstäbe F geschickt werden, zur Vermeidung von Druckverlusten abzusperren.

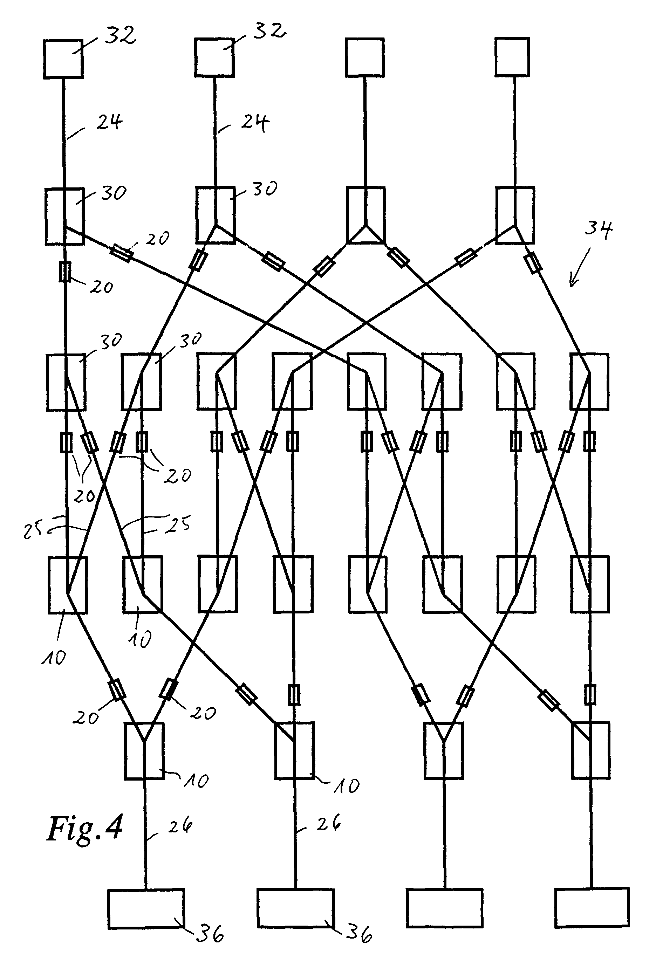

Fig. 4 zeigt schematisch eine Wechselstrecke eines Transportsystems zum pneumatischen Fördern von Filterstäben. Von vier Filterstabherstellmaschinen und Filterbeschickungsvorrichtungen 32 werden die Filterstäbe über Förderstrecken 24 zu der Wechselstrecke 34 transportiert. Dort werden sie mittels in zwei Stufen hintereinander geschalteter aktiver Weichen 30 in eine von 16 Förderstrecken 25 geleitet und dann wiederum mittels in zwei Stufen hintereinander geschalteter passiver Weichen 10 in eine von vier Förderstrecke 26 geleitet, die zu einer Zigarettenmaschine 36 führt. In jeder der Förderstrecken 25 ist ein Absperrventil 20 angeordnet.

Fig. 4 zeigt lediglich schematisch eine Wechselstrecke 34, mittels der die über vier Förderstrecken 24 von vier Filterbeschickungvvorrichtungen 32 kommenden Filterstäbe einer von vier Zigarettenmaschinen 36 zugeführt werden kann. In der Praxis kann die Anzahl der Filterstabherstellmaschinen und der Zigarettenmaschinen wesentlich größer sein.

## Patentansprüche

1. Weiche (10, 30) für ein pneumatisch arbeitendes Transportsystem,
mit zwei Zweigkanälen (11, 12), die sich unter spitzem Winkel innerhalb einer Weichenkammer (13) zu einem Stammkanal (14) vereinigen, und
mit einer Zunge (15), die zwischen den beiden Zweigkanälen (11, 12) an dem ihnen zugewandten Ende der Weichenkammer (13) gelagert ist und zwischen zwei Stellungen verschwenkbar ist, in denen jeweils zwischen nur einem der Zweigkanäle (11, 12) und dem Stammkanal (14) eine Verbindung besteht,
gekennzeichnet durch
einen bistabilen Umschaltmechanismus, der die Zunge (15) in einer der beiden Stellungen mit einer definierten Kraft hält.

2. Weiche nach Anspruch 1, dadurch gekennzeichnet, daß die Zunge (15) durch Haltemagnete (16) innerhalb der Weichenkammer (13) in einer ihrer beiden Stellungen gehalten wird.

3. Weiche (10) nach Anspruch 1 oder 2 zur Verwendung als passive Weiche, dadurch gekennzeichnet, daß keine Einrichtungen zum zwangsweisen Umschalten der Zunge (15) vorgesehen sind.

4. Weiche (30) nach Anspruch 1 oder 2 zur Verwendung als aktive Weiche, dadurch gekennzeichnet, daß die Zunge (15) durch Pneumatikzylinder (28, 29) umschaltbar ist.

5. Verwendung einer oder mehrerer passiver Weichen nach Anspruch 3 in einem Transportsystem zum Fördern von Filterstäben von einer Mehrzahl von Filterstabherstellmaschinen zu einer Mehrzahl von Filteransetzmaschinen bei der Zigarettenherstellung, wobei jede der Filterstabherstellmaschinen über Förderstrecken (24, 25, 26) mit mehreren der Filteransetzmaschinen verbunden ist, dadurch gekennzeichnet, daß eine Mehrzahl der von den Filterstabherstellmaschinen ausgehenden Förderstrecken (25) durch eine oder mehrere der passiven Weichen (10) nach Anspruch 3 zu einer einzigen zu einer der Filteransetzmaschinen führenden Förderstrecke (26) vereinigt werden.

6. Verwendung einer oder mehrerer aktiver Weichen nach Anspruch 4 in einem Transportsystem zum Fördern von Filterstäben von einer Mehrzahl von Filterstabherstellmaschinen zu einer Mehrzahl von Filteransetzmaschinen bei der Zigarettenherstellung, wobei jede der Filterstabherstellmaschinen über Förderstrecken (24, 25, 26) mit mehreren der Filteransetzmaschinen verbunden ist, dadurch gekennzeichnet, daß mindestens eine der von den Filterstabherstellmaschinen ausgehenden Förderstrecken (24) durch eine oder mehrere der aktiven Weichen (30) nach Anspruch 4 zu mehreren zu den Filteransetzmaschinen führenden Förderstrecken (25) verzweigt.

7. Verwendung einer oder mehrerer passiver Weichen nach Anspruch 3 und einer oder mehrerer aktiver Weichen nach Anspruch 4 in einem Transportsystem zum Fördern von Filterstäben von einer Mehrzahl von Filterstabherstellmaschinen zu einer Mehrzahl von Filteransetzmaschinen bei der Zigarettenherstellung, wobei jede der Filterstabherstellmaschinen über Förderstrecken (24, 25, 26) mit mehreren der Filteransetzmaschinen verbunden ist, dadurch gekennzeichnet, daß mindestens eine der von den Filterstabherstellmaschinen ausgehenden Förderstrecken (24) durch eine oder mehrere der aktiven Weichen (30) nach Anspruch 4 in mehrere Förderstrecken (25) verzweigt und daß mindestens eine der verzweigten Förderstrecken (25) durch eine passive Weiche (10) nach Anspruch 3 mit anderen Förderstrecken (25) zu einer einzigen zu einer der Filteransetzmaschinen führenden Förderstrecke (26) vereinigt wird.

8. Verwendung nach einem der Ansprüche 5 bis 7, dadurch gekennzeichnet, daß ein Absperrventil (20) in mindestens einer der an die Zweigkanäle (11, 12) angeschlossenen Förderstrecken (25) angeordnet ist.

## Claims

1. Interchange (10, 30) for a pneumatic conveying system, comprising:
two branch tubes (11, 12) that join together at an acute angle in an interchange chamber (13) to form a main tube (14), and
a flap (15) that is positioned between the two branch tubes (11, 12) at the end of the interchange chamber (13) adjacent said branch tubes and that can be swiveled between two positions, in which in each case there is a connection between only one of the branch tubes (11, 12) and the main tube (14), characterized by
a bistable switch-over mechanism which holds the flap (15) with a defined force in either one of the two positions.

2. Interchange according to Claim 1, characterized in that the flap (15) is held in one of its two positions by means of holding magnets (16) in the interchange chamber (13).

3. Interchange (10) according to Claim 1 or 2 for use as a passive interchange, characterized in that there are no means to effectuate a forced switch-over of the flap (15).

4. Interchange (30) according to Claim 1 or 2 for use as an active interchange, characterized in that the flap (15) can be switched over by pneumatic cylinders (28, 29).

5. Use of one or more of the passive interchanges according to claim 3 in a conveying system for conveying filter plugs from a plurality of filter plug makers to a plurality of filter assemblers during cigarette production, wherein each of the filter plug makers is connected via conveying segments (24, 25, 26) to several of the filter assemblers, characterized in that, by means of one or more of the passive interchanges (10) according to Claim 3, a plurality of the conveying segments (25) extending from the filter plug makers are joined together to form one single conveying segment (26) leading to one of the filter assemblers.

6. Use of one or more of the active interchanges according to claim 4 in a conveying system for conveying filter plugs from a plurality of filter plug makers to a plurality of filter assemblers during cigarette production, wherein each of the filter plug makers is connected via conveying segments (24, 25, 26) to several of the filter assemblers, characterized in that, by means of one or more of the active interchanges (30) according to Claim 4, at least one of the conveying segments (24) extending from the filter plug makers branches off to form several conveying segments (25) leading to the filter assemblers.

7. Use of one or more of the passive interchanges according to claim 3 and of one or more of the active interchanges according to claim 4 in a conveying system for conveying filter plugs from a plurality of filter plug makers to a plurality of filter assemblers during cigarette production, wherein each of the filter plug makers is connected via conveying segments (24, 25, 26) to several of the filter assemblers,
characterized
in that by means of one or more of the active interchanges (30) according to claim 4, at least one of the conveying segments (24) extending from the filter plug makers branches off to form several conveying segments (25) and
in that by means of a passive interchange (10) according to claim 3, at least one of the branched conveying segments (25) is joined together with other conveying segments (25) to form one single conveying segment (26) leading to one of the filter assemblers.

8. Use according to one of Claims 5 through 7, characterized in that a shut-off valve (20) is arranged in at least one of the conveying segments (25) connected to the branch tubes (11, 12).

## Revendications

1. Aiguillage (10, 30) pour un système de transport pneumatique,
comprenant deux canaux d'embranchement (11, 12) qui se réunissent à angle aigu à l'intérieur d'une chambre d'aiguillage (13) pour former un canal principal (14), et
une lame (15) qui tourillonne entre les deux canaux d'embranchement (11, 12), à l'extrémité de la chambre d'aiguillage (13) qui est dirigée vers eux, et qui peut pivoter entre deux positions dans chacune desquelles il n'existe une communication qu'entre un seul des canaux d'embranchement (11, 12) et le canal principal (14).
caractérisé par :
un mécanisme de commutation bistable qui maintient la lame (15) dans l'une des deux positions avec une force définie.

2. Aiguillage selon la revendication 1, caractérisé en ce que la lame (15) est maintenue dans l'une de ses deux positions, à l'intérieur de la chambre d'aiguillage, par des aimants de retenue (16).

3. Aiguillage (10) selon la revendication 1 ou 2, destiné à être utilisé comme aiguillage passif, caractérisé en ce qu'il n'est pas prévu de dispositifs pour la commutation forcée de la lame (15).

4. Aiguillage (30) selon la revendication 1 ou 2, destiné à être utilisé comme aiguillage actif, caractérisé en ce que la lame (15) peut être commutée par des cylindres pneumatiques (28, 29).

5. Utilisation d'un ou de plusieurs aiguillages passifs selon la revendication 3 dans un système de transport destiné à transporter des barres de filtres depuis une pluralité de machines de fabrication de barres de filtres jusqu'à une pluralité de machines de pose des filtres dans la fabrication des cigarettes, dans lequel chacune des machines de fabrication de barres de filtres est reliée à plusieurs des machines de pose des filtres par des trajets de transport (24, 25, 26), caractérisée en ce qu'une pluralité des trajets de transport (25) qui partent des machines de fabrication de barres de filtres, sont réunis par un ou plusieurs des aiguillages passifs (10) selon la revendication 3, pour former un unique trajet de transport (26) conduisant à une des machines de pose des filtres.

6. Utilisation d'un ou plusieurs aiguillages actifs selon la revendication 4 dans un système de transport destiné à transporter des barres de filtres depuis une pluralité de machines de fabrication de barres de filtres jusqu'à une pluralité de machines de pose des filtres dans la fabrication des cigarettes, dans laquelle chacune des machines de fabrication de barres de filtres est reliée à plusieurs des machines de pose des filtres par des trajets de transport (24, 25, 26), caractérisée en ce qu'au moins un des trajets de transport (24) qui partent des machines de fabrication de barres de filtres est ramifié, par un ou plusieurs des aiguillages actifs (30) selon la revendication 4, en plusieurs trajets de transport (25) qui conduisent aux machines de pose des filtres.

7. Utilisation d'un ou plusieurs aiguillages passifs selon la revendication 3 et d'un ou plusieurs aiguillages actifs selon la revendication 4 dans un système de transport destiné à transporter des barres de filtres depuis une pluralité de machines de fabrication de barres de filtres jusqu'à une pluralité de machines de pose des filtres dans la fabrication des cigarettes, dans laquelle chacune des machines de fabrication de barres de filtres est reliée à plusieurs des machines de pose des filtres par des trajets de transport (24, 25, 26), caractérisée en ce qu'au moins un des trajets de transport (24) qui partent des machines de fabrication de barres de filtres est ramifié, par un ou plusieurs des aiguillages actifs (30) selon la revendication 4, en plusieurs trajets de transport (25) et en ce qu'au moins un des trajets de transport ramifiés (25) est réuni, par un aiguillage passif (10) selon la revendication 3 à d'autres trajets de transport (25) pour former un unique trajet de transport (26) qui mène à l'une des machines de pose des filtres.

8. Utilisation selon une des revendications 5 à 7, caractérisée en ce qu'une vanne d'arrêt (20) est montée dans au moins un des trajets de transport (25) raccordés aux canaux d'embranchement (11, 12).
